# EUROPEAN PATENT APPLICATION

(11) **EP 2 720 150 A1**
(43) Date of publication of application: **16.04.2014**
(21) Application number: 12461551.9
(22) Date of filing: 15.10.2012
(51) Int. Cl.: G06F 11/30, H04L 29/08

(54) **Method for managing, searching and sharing of representational state transfer (REST) resources**

(71) Applicant: Uniwersytet Ekonomiczny W Poznaniu, 61-875 Poznan (PL)
(72) Inventor: Rykowski, Jarogniew, 61-875 Poznan (PL)
(74) Representative: Pawlowski, Adam

(57) **Abstract**

A method for managing representational state transfer (rest) resources, the method comprising the steps of starting at least one REST server; setting at least one of the available servers as a closest directory server; starting a further REST server; providing to the further REST server information regarding any other REST server as a starting point; communicating with the other REST server and setting addresses of key system elements including the closest directory address; registering in the closest directory the parameters of the further server, whereas the parameters comprise current address and resource for monitoring the server's state; periodically transmitting statistical data between the closest directory and the further REST server.

## Description

The present invention relates to a method for managing, searching and sharing of REST resources. The method is especially useful in ad-hoc data exchange between networked devices.

Prior art discloses server management utilities SMUs and content management systems CMS that are well known and widely used for many years. The known methods use either mechanisms built into a server (for example an Apache server) and server's extension (for example servlets operating with a use of a Tomcat-type server) or external databases (applies to most of the CMS systems) and appropriate scripts for dynamically generating content of the world wide web (WWW).

In case of using servers, operating according to the Representational State Transfer (REST), an application of standard methods for management of the server and its content is not possible.

The REST servers, which by definition are light servers, in contrast to typical WWW servers do not have built-in mechanisms for tracking, and so called log. The creators of the REST method have assumed that such servers have to be as minimal as possible with respect to the amount of programming code and resources used. Therefore, all mechanisms for controlling server's behaviour (or more precisely REST resources since each resource shall be treated individually as an equivalent of WWW mini-server) shall be implemented by a designer of the end system, if so required.

Due to the fact, that all REST resources are treated independently, complex management of a group of REST servers (resources) of common use but different location / implementation, is impossible. Additionally, in order to define a number and types of REST resources accessible in a given context (location), one needs to equip the target system in an appropriate directory, the location of which is publicly known to all potential users of the system.

The creation and use of such directory is also not standardized. Therefore, a system implemented to these principles has a very limited portability and does not meet the requirements posed in ad-hoc data exchange and other incidental methods of interaction among electronic devices.

Prior art discloses methods for searching administrative information within a group of World Wide Web (WWW) network. As previously explained, the developers of the REST method envisaged a use of an external directory for tracking REST resources state and availability. However, up to present time, there has not been provided a generic solution of a problem of gathering, processing and sharing administrative data regarding REST resources.

A prior art publication number US20090164485 entitled "TECHNIQUE FOR FINDING REST RESOURCES USING AN N-ARY TREE STRUCTURE NAVIGATED USING A COLLISION FREE PROGRESSIVE HASH" discloses a data structure which, given an identifier for a Representational State Transfer (REST) resource, can rapidly yield a configured target and can simultaneously yield all configured pattern based rules and constraints for the target. This data structure can be part of an "out of the box" solution, which can be easily adapted and applied to any REST based software solution.

The publication of '485 presents a method for mapping URL addresses to REST requests (address of a REST server that is responsible for a given document or a group of documents). It is not a directory driven method and does not allow for searching for a REST resource. It only allows for switching one static address to another static address. The solution does not allow changes in network structure, is not sufficiently resilient to errors and requires knowledge of server's URL address that shall be called.

The solution of '485 does not fulfill the needs of an ad-hoc driven system in which the number of nodes and their locations rapidly change. There are no provided adequate monitoring capabilities that could make the system extremely dynamic.

The system of '485 has a static network structure and that structure is known to devices addressing the available REST resources. The structure of the network is constant, thereby inadequate for dynamic adaptation of addresses to changing operational circumstances.

Presently available solutions have limited applicability (for example monitoring operation of specific resources having static addresses known a'priori) and require manual storage of the monitored resource to a directory. Such an approach rules out use of a directory in ad-hoc interaction wherein neither location of the directory nor potentially useful resources are defined in advance and shall be dynamically defined taking into account context (for example a location).

The REST methodology has a number of limitations in ad-hoc interaction. It is apparent that the REST servers, as currently known, do not meet the requirements posed by ad-hoc interaction solutions. In particular, they do not meet the requirements of efficient administration of resources and their groups in multiple locations, efficient monitoring of resources state (for example availability, requests statistics or resources usage), automatic propagation of changes, contextual access to information from a directory. Additionally, there are not any system mechanisms for finding a REST server within a predefined group of servers, based on an ad-hoc generated characteristics (for example resources usage, type, location etc.).

Therefore, as can be readily seen, enhancements of methods for managing, searching and sharing of REST resources would be very beneficial. Such enhancements shall be preferably useful in ad-hoc interaction.

The aim of the present invention is to alleviate the aforementioned drawbacks of the prior art and present a method for managing, searching and sharing of REST resources.

The object of the present invention is a method for managing representational state transfer (REST) resources, the method comprising the steps of starting at least one REST server; setting at least one of the available servers as a closest directory server; starting a further REST server; providing to the further REST server information regarding any other REST server as a starting point; communicating with the other REST server and setting addresses of key system elements including the closest directory address; registering in the closest directory the parameters of the further server, whereas the parameters comprise current address and resource for monitoring the server's state; periodically transmitting statistical data between the closest directory and the further REST server.

Preferably, the step of periodically transmitting statistical data comprises the closest directory server sending a request to activate the monitoring resource 205 of the further REST server.

Preferably, the step of periodically transmitting statistical data comprises the further REST server initiating itself a transmission to the closest directory server by sending its statistical data.

Preferably, the data exchanged between the REST servers is in a form of XML files.

Preferably, any of the at least one REST servers is capable of transmitting information regarding a method for accessing the closest directory server.

The object of the present invention is also a computer program comprising program code means for performing all the steps of the computer-implemented method according to the present invention when said program is run on a computer.

The object of the present invention is also a computer readable medium storing computer-executable instructions performing all the steps of the computer-implemented method according to the present invention, when executed on a computer.

The object of the present invention is also a method for sharing representational state transfer (REST) resources by a client REST server, the method comprising the steps of starting a REST server; communicating with at least one of the available servers being a closest directory server; providing to the started REST server, information regarding any other REST server as a starting point; communicating with the other REST server and setting addresses of key system elements including the closest directory address; providing to the closest directory the parameters of the started REST server, whereas the parameters comprise current address and resource for monitoring the server's state; periodically transmitting statistical data between the closest directory and the started REST server.

The object of the present invention is also a computer program for a client REST server comprising program code means for performing all the steps of the computer-implemented method according to the present invention when said program is run on a computer.

The object of the present invention is also a computer readable medium storing computer-executable instructions performing all the steps of the computer-implemented method for a client REST server according to the present invention, when executed on a computer.

These and other objects of the invention presented herein are accomplished by providing an improved system and method for managing, searching and sharing of representational state transfer (REST) resources. Further details and features of the invention, its nature and various advantages will become more apparent from the following detailed description of the preferred embodiments shown in a drawing, in which:
FIG. 1 presents methods for communication of REST servers with a directory; and
FIG. 2 shows registering of a server in a REST system.

The present invention relates to managing of a group of REST servers, in a distributed environment, with a use of executing programmed computing services and communication services.

The present invention is also related to a computer program and a computer device for cataloging current state, searching, analyzing and selection of servers to be activated.

Additionally, the present invention may be used, for instance, for creating complex systems of Internet Of Things and in particular such systems used in ad-hoc interaction (i.e., incidental interaction), the systems operating with a use of available computing services of REST architecture. Another practical application of the invention is a REST server operating in a proxy mode and specialized communication services.

The solution, according to the present invention, is based on a use of an extension of a REST server that utilizes execution of an additional REST resource within the REST server.

A resource, within the spirit of the present technical concept, is any given, individually identified, by means of a unique name, element of a system. In most cases, resources of a REST system are equivalent to a World Wide Web site. Preferably, there is used a main rule of a single address being equivalent to a single resource. A unified resource locator (URL) may comprise a part comprising parameters (part of the address after the '?' character). The parameters do not influence resource identification but may change its behavior. For example, a parameter of "?language=pl" means that the website of the resource is communicating in polish language. However, irrespective of the language the website will have the same information content.

A resource may also be a physical device, to which access will be realized by means of a REST server address that acts as an interface in data exchange with the device.

Each REST server comprises a given set of resources, meaning the server has associated number of unique addresses of which each identifies a given resource.

The resources in REST addressing are grouped hierarchically, whereas a hierarchy is identified by successive sections of the URL address. For example a resource identified with *http:*//*192.168.1.1*/*home*/*kitchen*/*door* represents access to a device associated with a *door* in the *kitchen* at *home.*

The resources may be addressed in groups. For example, an address of *http:*//*192.168.1.1*/*home*/*kitchen*/ will select all resources present in the kitchen, e.g., door, window, table, etc. Such group addressing is a kind of multilevel directory.

Each REST resource (as mentioned previously) has a defined name, which may not be necessarily standardized, and is periodically tested/monitored by dedicated REST servers - directories. Data gathered, by each server of a directory, may be used for statistical purposes and for searching for other servers having required features.

Content of the data, shared by the monitored servers, is standardized and transmitted preferably as an XML document. At the same time, a directory during its monitoring transmits, to all monitored servers, its statistical data and updates of its state (for example its current location). Based on these data, each server of the system is capable of informing any other server: explicitly about its state or directory's state, in which it is registered, and indirectly about current state of any given server after consulting the directory.

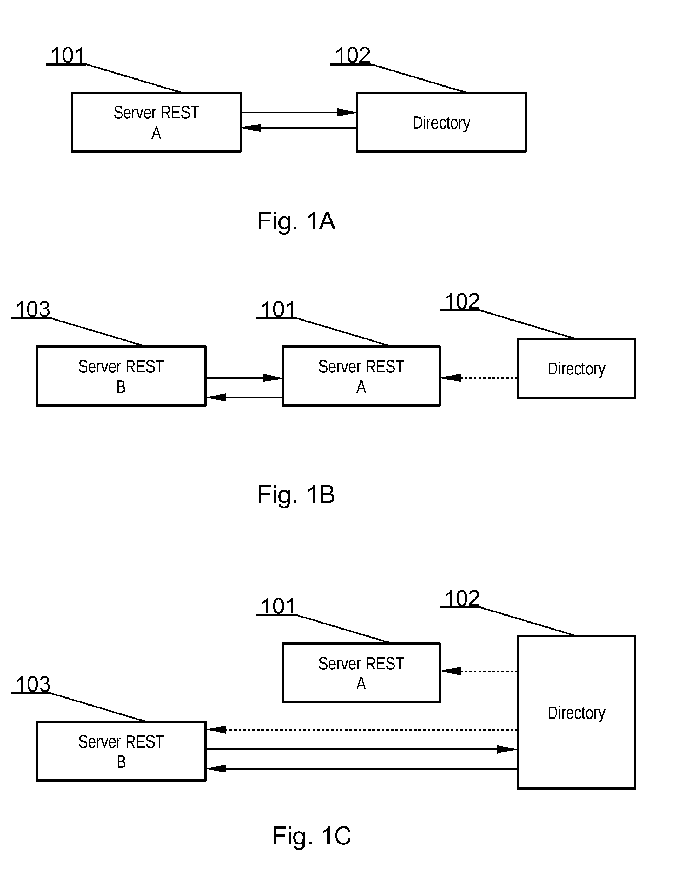

Fig. 1 presents methods for communication of REST servers with a directory. Fig. 1A shows an access to a directory when the REST server A 101 is aware of the directory 102 address. There is a communication established, which in a preferred embodiment is bi-directional.

Fig. 1B depicts obtaining of directory's 102 address by a REST server B 103 from the REST server A 101, which knows the address. Additionally Fig. 1C shows accessing to the directory 102 by the REST server B 103 - the REST server A is not required for this communication at this point. The dashed line represents monitoring of the servers by the directory. From the registration time, the B server may also share the directory's 102 address to other servers in the network.

If the directory 102 changes its address or delegates its functions to a different directory, it is sufficient that the directory informs all servers that are registered in the directory. This allows for operations in a variable environment - the address of the directory need not stay static.

The number of directory servers that are active within a system is unlimited. The servers are connected to each other in a cascading manner. This means that each directory may sign in to its parent directory. The servers allow for transmission of information about the monitored servers.

Monitoring of servers and sharing data about their current state in directories linked in a cascading manner operates similarly to Domain Name Service (DNS) known from the Internet solutions. Based on computer's name a server may in a cascading manner determine the computer's location within the network. The directory address (one or more) is known to any other server in the environment. Therefore, in order to sign in to the environment it is sufficient to request any given node of the environment for address of the closest directory and subsequently, by means of the closest directory, retrieve information about any other server (including other directory).

Due to practical reasons, in case when there is more than one directory operating in a given location, such directories are preferably synchronized, meaning they are aware of their locations and are able to transfer, between each other, requests from other servers such that if any directory is aware of a location of a searched node, an inquiry directed to any given directory will surely pass such information.

According to the present invention there is a general rule that each device has its associated, private REST resource, that is a unique address, via which it may be communicated with. For the ease of explanations made herein it is assumed that a single REST resource is equivalent to a REST server - meaning that the servers are single-resource servers. However, from the point of view of the complete solution this is irrelevant because management of resources (logically representing objects of the real world) is logically separated from management of REST servers that are intermediary elements in accessing the resources - grouping REST resources in a single server for management purposes is not necessary related with keeping the real-world objects together.

The directories execute monitoring of activity of all elements of the environment in a near real time. For this purpose each of the servers registered within the environment declares its address in a directory it selects. The directory periodically verifies accessibility of the node by sending to the node a test message. The nodes that will confirm a safe reception of the test message are treated as active while the remaining nodes are marked in the respective directories as temporarily unavailable.

Thereby the system allows its users for accessing only these devices, for which there is a certainty that they are active at a given time. In order to make network nodes search easier, wherein the nodes have desirable characteristics, types of nodes have been introduced. A type of a node is defined by means of a sequence of characters, preferably and abbreviation that is meaning full to users (names of types may be arbitrarily defined by the system administrator).

Each directory has implemented a mechanism of multi-parameter search for nodes of a given type. In particular, the parameters may define current usage of the node (for example, to find the least utilized server of a given type). The suggested servers may subsequently be searched, inquired or used in any other available way depending on requirements. Such an approach allows for developing a system resilient to switching off of some servers (as far as there are other active servers that may take over the tasks of the servers that are inactive) without a change of operation of any other network nodes/servers. The approach also allows for scalability of the system depending on increasing needs - in case of increasing of the system load/usage one only needs to add another server of a given type and features in order to safely distribute the load between all servers. After the load (use of resources) decreases, a server may be switched off without a need of reconfiguring the system.

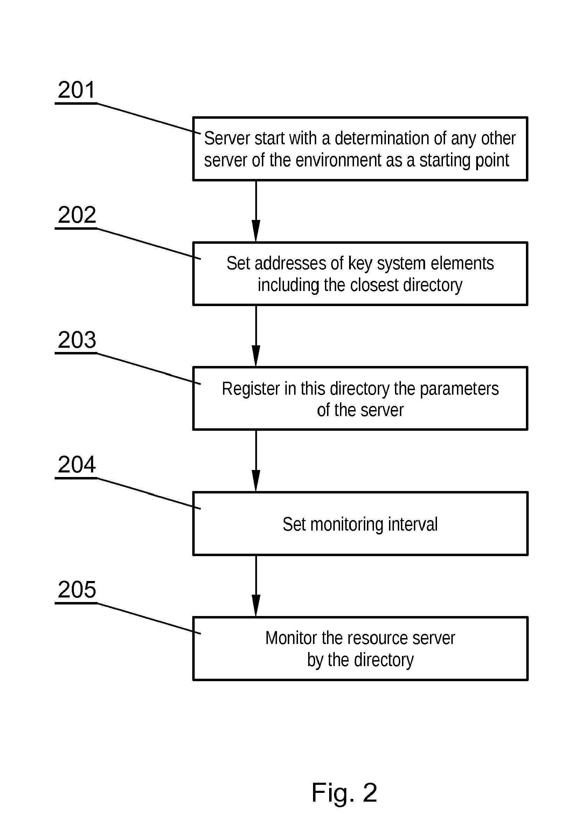

From a point of view of a single REST server, the registering of a server in the system is executed in the following way, which is also presented in Fig. 2. In the first step 201, a server needs to be started with a determination of any other server of the environment as a starting point. The started server communicates 202 with the other server (it may be another proxy server that has previously been declared in the environment and which is active) and sets addresses of key system elements including the closest directory.

Other key system elements may not be defined up front because for each device/server there may exist a different key element. Key elements that may usually be present are the following (among others): Serial Number Generator (SNG, to synchronize unique identifiers given to the new system elements) or Domain Name System (DNS, to map user-friendly names to IP addresses) server or similar.

The next step 203, after obtaining a directory address, the server registers in this directory its parameters, in particular current address and name of the resource for monitoring the server's state. The parameters may be at any given time updated at a request of the monitored server. There are two methods of transmitting statistical data between a directory and the monitored server. In a first case the directory server is the initiating side, which means the server periodically sends a request to activate the monitoring resource 205. In the second case, the monitored server initiates itself a transmission to the directory by sending its statistical data.

From a client server's side the process may be presented as follows. A first step is a step of starting a REST server. Subsequently there is a step of communicating with at least one of the available servers being a closest directory server. Next there is executed a process of providing to the started REST server, information regarding any other REST server as a starting point. Further the method continues with communicating 202 with the other REST server and setting addresses of key system elements including the closest directory address. Then the system executed a step of providing 203 to the closest directory the parameters of the started REST server, whereas the parameters comprise current address and resource for monitoring the server's state. Lastly the process includes a step of periodically transmitting (204, 205) statistical data between the closest directory and the started REST server.

There also exists possibility of transmitting state information and statistical data including historical data presenting changes. Such information is transmitted at request of any REST server by means of an inquiry to the aforementioned resource, which may be accessed by sending an XML document to a given address.

A time between subsequent monitoring requests id defined by a directory's parameter, which may be set depending on the system's requirements.

In practical implementations both methods may be utilized with different time parameters. The monitored server periodically sends data about its status every N time units (the value of N only depends on server's administrator's decision). If the directory receives the data in a time shorter than M time units from the previous reception (M > N) it does not execute any other functions. However, if the data of the monitored server do not arrive during the M time units, the directory shall initiate a connection with the monitored server 204. Such double monitoring prevents increased network traffic and load of the directory and allows for a detection of a situation where the monitored server is suddenly switched off and there is not any possibility of establishing a communication link with this server.

Servers that have been temporarily switched off are also periodically monitored by the directory - if such a server is available again in the same location, it will be from then on reported by the directory as an active server.

It has to be noted that a server that is switched off as scheduled previously, may before the actual switching off send an appropriate message to the directory, which shall prevent its monitoring or limit the monitoring (for example by defining a long M time for this particular server).

As a general preferred approach, each server may implement all roles in resources addressing. If a server cannot respond to a request, the server is able to transfer the request to another server, that will have a higher probability of responding to the request. At the end of such a chain of communication requests there is always a directory that may respond to all possible requests. The outcome of such approach is that wherever a request is directed the request will receive a response and, if the means for obtaining the response have not been optimum, information as to how the process of obtaining the response may be further improved.

The advantages of the present invention include improved usability in ad-hoc interaction wherein there is not any possibility of applying static addressing and searching for servers and REST resources. In the presented solution it is enough that a server is aware of at least one address of another server in the network (may directly address the server) and by the other server's inter-mediation the server may retrieve information regarding current state of any other server within the network. The initial server may also search for servers comprising selected features (e.g., statistical information about access time, load, etc.) or being of a given type. Further, the initial server may compare servers by means of various criteria including for example usage/load statistical etc.

The system according to the present invention is especially beneficial in these circumstances where there are frequent changes of configuration, where there are many servers of various characteristics and purpose whereas interaction with the servers is mainly effected by means of ad-hoc communication.

From a user's perspective the system allows for the unification of access to functions offered by servers without a need for generating a separate implementation for different locations. This opens a possibility for incidental use, especially in public places (under a condition of the standardization of types and methods of calling the REST servers), such as offices, museums, public transport locations or hospitals.

An important feature of the system is that all of its elements are fully complaint with the REST architecture, including the directories. Therefore all information is gathered and shared as standardized XML documents. Such uniform approach allows for quick and efficient implementation of the system in any given environment utilizing REST servers.

At the same time, the network transmission responsible for monitoring is minimized to a necessary minimum level, which lowers the bandwidth and efficiency of the whole system by an insignificant value.

It can be easily recognised, by one skilled in the art, that the aforementioned system and method for managing, searching and sharing of representational state transfer (rest) resources may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for managing representational state transfer (rest) resources the method comprising the steps of
- starting at least one REST server;
- setting at least one of the available servers as a closest directory server,
the method being **characterized in that** it further comprises the steps of
- starting (201) a further REST server;
- providing to the further REST server information regarding any other REST server as a starting point;
- communicating (202) with the other REST server and setting addresses of key system elements including the closest directory address;
- registering (203) in the closest directory the parameters of the further server, whereas the parameters comprise current address and resource for monitoring the server's state;
- periodically transmitting (204, 205) statistical data between the closest directory and the further REST server.

2. The method according to claim 1, **characterized in that** the step of periodically transmitting statistical data comprises the closest directory server sending a request to activate the monitoring resource 205 of the further REST server.

3. The method according to claim 1, **characterized in that** the step of periodically transmitting statistical data comprises the further REST server initiating itself a transmission to the closest directory server by sending its statistical data.

4. The method according to claim 1, **characterized in that** the data exchanged between the REST servers is in a form of XML files.

5. The method according to claim 1, **characterized in that** any of the at least one REST servers is capable of transmitting information regarding a method for accessing the closest directory server.

6. A computer program comprising program code means for performing all the steps of the computer-implemented method according to any of claims 1-7 when said program is run on a computer.

7. A computer readable medium storing computer-executable instructions performing all the steps of the computer-implemented method according to any of claims 1-7 when executed on a computer.

8. A method for sharing representational state transfer (REST) resources by a client REST server, the method comprising the steps of
- starting (201) a REST server;
- communicating with at least one of the available servers being a closest directory server,
the method being **characterized in that** it further comprises the steps of
- providing to the started REST server, information regarding any other REST server as a starting point;
- communicating (202) with the other REST server and setting addresses of key system elements including the closest directory address;
- providing (203) to the closest directory the parameters of the started REST server, whereas the parameters comprise current address and resource for monitoring the server's state;
- periodically transmitting (204, 205) statistical data between the closest directory and the started REST server.

9. A computer program comprising program code means for performing all the steps of the computer-implemented method according to claim 8 when said program is run on a computer.

10. A computer readable medium storing computer-executable instructions performing all the steps of the computer-implemented method according to claim 8 when executed on a computer.
